# FASCICULE DE BREVET EUROPEEN

(11) **EP 3 071 792 B1**
(45) Date de publication et mention de la délivrance du brevet: **30.12.2020**
(21) Numéro de dépôt: 14806028.8
(22) Date de dépôt: 06.11.2014
(51) Int. Cl.: F01D 5/02, F02C 7/36, F02C 7/32

(54) **MOTEUR MODULAIRE**
MODULARES TRIEBWERK
MODULAR ENGINE

(30) Priorité: 21.11.2013 FR 1361460
(43) Date de publication de la demande: 28.09.2016
(73) Titulaire: Safran Aircraft Engines, 75015 Paris (FR)
(72) Inventeur: BRAULT, Michel Gilbert Roland, F-77550 Moissy-Cramayel cedex (FR); NOWAKOWSKI, Nathalie, F-77550 Moissy-Cramayel cedex (FR)
(74) Mandataire: Gevers & Orès
(86) Numéro de dépôt international: PCT/FR2014/052846
(87) Numéro de publication internationale: WO 2015/075345

(56) Documents cités:
- EP-A1- 1 813 792
- EP-A2- 2 327 859
- US-A1- 2009 081 039
- US-A1- 2012 257 960
- US-B1- 8 402 741

## Description

### Domaine de l'invention

La présente invention concerne un moteur de propulsion aéronautique, tel qu'un turboréacteur, une turbosoufflante multi-flux, notamment à fort taux de dilution, ou un turbopropulseur, présentant un arbre de transmission de puissance avant, entrainé par un rotor de turbine par l'intermédiaire d'un réducteur de vitesse. Dans le cas d'une turbosoufflante, sur cet arbre de transmission de puissance est montée notamment la soufflante.

### Etat de l'art

Les moteurs à turbosoufflante comportent plusieurs étages de compresseur, notamment un compresseur basse pression (BP) désigné aussi compresseur de gavage ou booster et un compresseur haute pression (HP) qui appartiennent au corps primaire du moteur. En amont du compresseur basse pression est disposée une roue d'aubes mobiles de grande dimension, ou soufflante, qui alimente à la fois le flux primaire qui traverse les compresseurs BP et HP et le flux froid, ou flux secondaire, concentrique au premier et qui est dirigé soit directement vers une tuyère de flux froid, dite tuyère secondaire, soit vers un mélangeur des flux primaire et secondaire.

La soufflante est entraînée par l'arbre de rotation du corps BP et tourne généralement à la même vitesse que lui. Il peut cependant être intéressant de faire tourner la soufflante à une vitesse de rotation inférieure à celle de l'arbre BP, notamment lorsque celle-ci est de très grande dimension, dans le but de mieux l'adapter aérodynamiquement. Pour cela on dispose un réducteur entre l'arbre BP et un arbre de transmission de puissance, auquel la soufflante est attachée. La soufflante, l'arbre et le réducteur font, en général, partie d'un même module, amont, dénommé module de soufflante.

Les moteurs aéronautiques modernes sont souvent réalisés sous la forme d'un assemblage de modules qui peuvent comporter des parties fixes et des parties mobiles. Un module est défini comme un sous-ensemble d'un moteur qui présente des caractéristiques géométriques au niveau de ses interfaces avec les modules adjacents suffisamment précises pour qu'il puisse être livré individuellement et qui a subi un équilibrage distinct lorsqu'il comporte des parties tournantes. L'assemblage des modules permet de constituer un moteur complet, en réduisant au maximum les opérations d'équilibrage et d'appariement des pièces en interface.

La modularité d'un moteur est un élément clé pour la maintenance. En effet, lors d'une intervention, Il faut que les pièces soient accessibles facilement sans avoir à démonter un nombre important de parties du moteur. Dans la pratique, on essaye d'obtenir un découpage en quelques modules majeurs. Par exemple pour un turboréacteur à soufflante avant, on cherche un découpage en trois modules : un premier module majeur pour la partie avant comprenant la soufflante et le compresseur BP, un deuxième module majeur pour la partie comprenant le corps HP et un troisième module majeur pour la partie arrière du moteur comprenant la turbine BP et l'arbre de turbine.

La maintenance est particulièrement difficile sur les moteurs comprenant un réducteur dans la partie avant. Le problème dans ce cas est l'accessibilité à un écrou interne de turbine, par lequel sont liés deux modules majeurs entre eux. On rappelle que dans un turboréacteur à double corps par exemple, l'écrou interne relie, à l'avant, l'arbre de turbine BP à l'arbre de soufflante. Sur les moteurs de l'art antérieur avec architecture à réducteur, l'intervention sur le premier module majeur nécessite le démontage d'une partie du réducteur pour avoir accès à l'écrou de turbine car celui-ci est masqué par le réducteur. Dans ce cas, la modularité du premier module majeur est perdue. De plus, il faut désolidariser le deuxième module majeur et le troisième module majeur de manière indépendante. Un exemple d'un moteur selon l'art antérieure est décrit dans le document US 8 402 741 B1.

### Exposé de l'invention

Le présent déposant s'est fixé comme objectif la réalisation d'un moteur avec réducteur qui permet de résoudre ce problème de modularité.

On parvient à cet objectif, conformément à l'invention, avec un moteur à structure modulaire selon la revendication 1 comportant une pluralité de modules coaxiaux avec, à une extrémité, un premier module comprenant un arbre de transmission de puissance et un réducteur de vitesse, ledit arbre de transmission de puissance étant entraîné par l'intermédiaire du réducteur de vitesse par un arbre de turbine, solidaire d'un desdits modules coaxiaux distinct du premier module, le réducteur de vitesse comprenant en entrée un moyen d'entraînement fixé à l'arbre de turbine et à un tourillon d'un arbre d'un rotor de compresseur basse pression, caractérisé par le fait qu'il comprend un premier écrou de fixation du moyen d'entraînement au tourillon et un second écrou de fixation du moyen d'entraînement à l'arbre de turbine.

De préférence, le réducteur de vitesse est agencé de manière à présenter une ouverture centrale configurée pour permettre l'accès d'un outil de montage/démontage, à travers ladite ouverture, au second écrou depuis ladite extrémité du moteur. Le second écrou est appelé écrou de turbine dans ce qui suit.

Dans la présente demande, on entend par un moteur à structure modulaire, un moteur qui est formé par l'assemblage de modules. Ce type de moteur est bien connu dans le domaine aéronautique et facilite notamment les opérations de montage et démontage d'un moteur, par exemple lors d'une opération de maintenance.

L'invention propose notamment de dissocier les moyens de fixation des moyens d'entraînement à l'arbre de turbine, des moyens de fixation des moyens d'entraînement au tourillon. Grâce à ces caractéristiques, on résout le problème de modularité du moteur car le premier module peut être séparé des modules situés en arrière sans que le réducteur de vitesse soit démonté au préalable. En effet, le dévissage du second écrou (ou écrou de turbine) permet de dissocier le moyen d'entraînement de l'arbre de turbine sans dissocier le moyen d'entraînement du tourillon qui restent solidaires l'un de l'autre grâce au premier écrou. Il est donc envisageable de démonter et de retirer le premier module en dévissant un seul écrou, ce module ne risquant pas de se dissocier davantage du fait du dévissage du second écrou.

De préférence, le moyen d'entraînement du réducteur de vitesse est de forme annulaire et présente ladite ouverture centrale de passage d'un outil de montage/démontage de l'écrou de turbine. Le moyen d'entraînement est lui-même relié à la roue d'entrée du réducteur de vitesse qui est par exemple à train épicycloïdal avec une roue d'entrée solidaire du planétaire et l'arbre de transmission de puissance entraîné par les satellites.

Conformément à un mode de réalisation, l'extrémité avant de l'arbre de turbine est supportée par un palier solidaire du premier module.

Plus particulièrement, le moyen d'entraînement du réducteur de vitesse forme au moins une paroi pour une enceinte étanche de lubrification et de refroidissement dudit palier. Cette solution présente l'avantage de permettre le démontage du premier module tout en conservant l'huile de lubrification à l'intérieur de celui-ci. Il n'est pas nécessaire de vidanger l'huile de lubrification auparavant.

Pour assurer le montage/démontage complet du premier module, celui-ci est retenu également par un moyen de fixation amovible à un élément de carter du moteur.

Avantageusement, le premier écrou a un diamètre supérieur à celui du premier écrou.

L'invention s'applique à un turboréacteur comportant un moteur tel que décrit ci-dessus, dont le premier module comprend une soufflante montée sur ledit arbre de puissance. Plus particulièrement, l'invention s'applique à un turboréacteur avec un deuxième module, en aval du premier module, le deuxième module comportant un rotor, formé d'un compresseur haute pression et d'une turbine haute pression, et une chambre de combustion. Elle s'applique notamment à un turboréacteur dont le carter du premier module est solidaire du carter du deuxième module par un moyen de fixation amovible.

De préférence, le turboréacteur comprend un troisième module avec une turbine basse pression, ledit arbre de turbine étant solidaire du rotor de la turbine basse pression du troisième module.

Enfin l'invention porte également sur un turboréacteur tel que décrit ci-dessus comprenant trois modules successifs, ledit premier module avec un rotor de soufflante et le compresseur basse pression (BP) ou de gavage, un deuxième module avec un rotor formé d'un compresseur haute pression, d'une turbine haute pression et une chambre de combustion et un troisième module avec un rotor de turbine basse pression et un arbre de turbine coaxial avec le rotor haute pression et, en service, relié au rotor de soufflante par l'intermédiaire du réducteur de vitesse, ce turboréacteur étant du type multiflux.

De préférence, le premier module comprend un rotor de compresseur basse pression avec un arbre de compresseur basse pression comprenant un tourillon supporté par un palier solidaire du premier module et immobilisé axialement par un écrou de blocage du rotor du compresseur basse pression.

Dans un mode particulier de réalisation, le premier module ou module de soufflante comprend au moins une pièce de support de l'arbre de soufflante par l'intermédiaire de deux roulements, ladite pièce de support comportant une première bride de fixation du module conformée pour être rattachée à une seconde bride portée par une pièce structurale du turboréacteur, et le réducteur de vitesse est porté par un carter de support comportant une bride conformée pour pouvoir se fixer sur ladite seconde bride structurale du turboréacteur, de façon à pouvoir monter le réducteur de vitesse sur ledit module de soufflante préalablement à l'assemblage du module de soufflante sur au moins un autre module du turboréacteur.

### Description des figures

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue générale en demi coupe axiale d'un turboréacteur double flux à fort taux de dilution incorporant un réducteur de vitesse,
- la figure 2 est une vue partielle du moteur de la figure 1 représentant la partie avant avec le réducteur,
- la figure 3 est une vue du moteur de la figure 1 dont le premier module est détaché,
- la figure 4 est une vue du moteur de la figure 1 dont les trois modules sont séparés les uns des autres,
- la figure 5 montre le détail de l'écrou de turbine en place sur le moteur.
- la figure 6 montre le détail de la fixation de l'interface du premier module sur une bride du deuxième module.

### Présentation détaillée d'un mode de réalisation

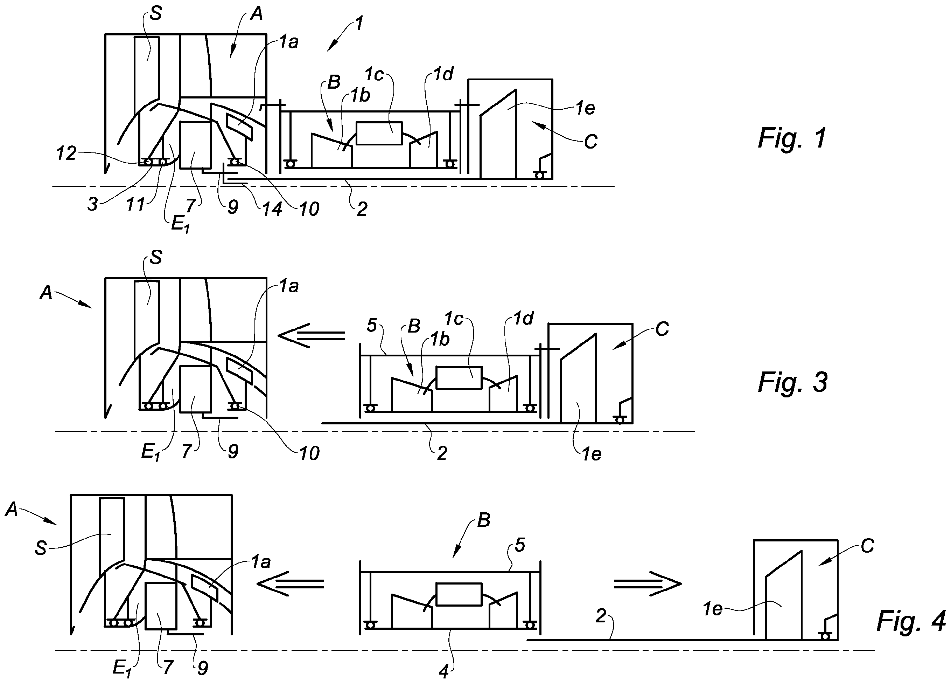

En se référant à la figure 1, on voit un turboréacteur 1 d'axe XX qui comporte, une soufflante S, un compresseur basse pression ou de gavage 1a, un compresseur haute pression 1b, une chambre de combustion 1c, une turbine haute pression 1d, une turbine basse pression 1e. Le compresseur haute pression 1b et la turbine haute pression 1d sont reliés par un arbre haute pression 4 et forment avec lui un corps haute pression HP. Le compresseur basse pression 1a et la turbine basse pression 1e sont reliés par un arbre basse pression BP 2 et forment avec lui un corps basse pression BP.

Dans les configurations classiques, le disque sur lequel sont montées les aubes de la soufflante S est entraîné en rotation par un arbre de transmission de puissance ou arbre de soufflante 3. Celui-ci est lui-même entraîné directement par l'arbre BP 2. Dans le moteur de l'invention, l'arbre de transmission de puissance 3 est entraîné par l'arbre BP 2 au travers d'un réducteur de vitesse 7, ce réducteur étant de préférence à train épicycloïdal.

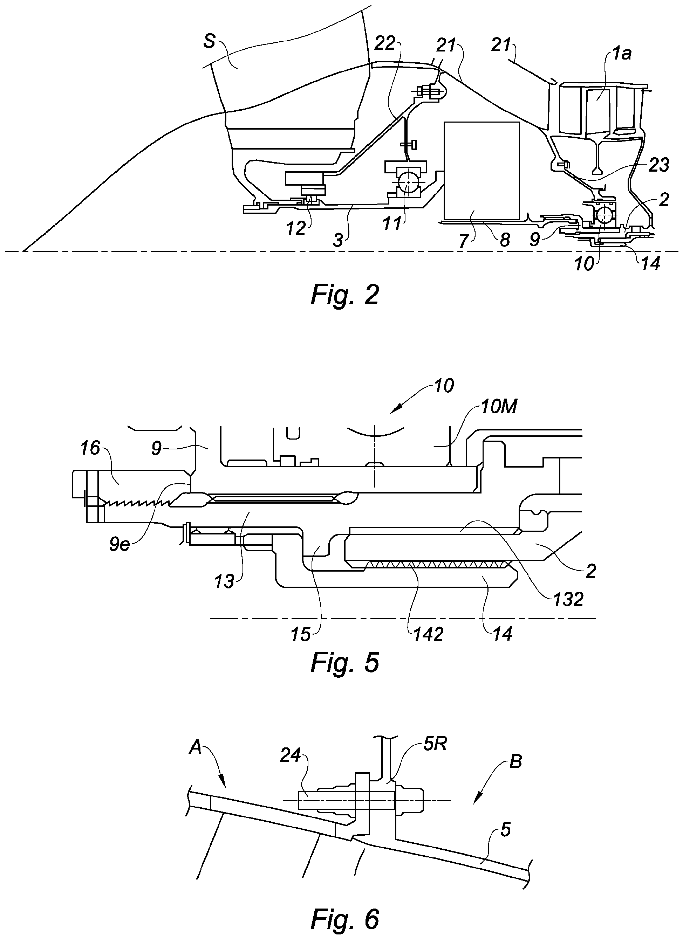

Le moteur est ici subdivisé en trois modules majeurs; un premier module A, dit module de soufflante, comprend une partie fixe comprenant le carter de soufflante formant l'enveloppe de la soufflante, le carter intermédiaire formant, entre autres, support de différents paliers, 10, 11, 12, et un interface de fixation au module adjacent B. La partie mobile du premier module A comprend la soufflante S avec son arbre de soufflante 3 supporté par les paliers de soufflante 11 et 12, l'un de butée à roulement à billes et l'autre à roulement à rouleaux. Elle comprend aussi le compresseur BP 1a supporté par un palier d'arbre basse pression 10, à roulement à billes. Comme cela est connu les roulements des paliers sont compris entre une bague fixe et une bague mobile. La bague fixe 10 du palier de l'arbre basse pression est montée sur un support de palier 23 et les bagues fixes des paliers 11 et 12 de la soufflante sont montées sur un support de palier 22, voir la figure 2. Le réducteur de vitesse 7 est logé entre la soufflante et l'arbre BP 2 dans l'espace défini entre les supports 22 et 23, solidaires du carter intermédiaire.

Le deuxième module majeur B comprend également des parties mobiles telles que le corps HP avec le compresseur 1b et la turbine 1d et des parties fixes telles que la chambre de combustion 1c et tous les éléments de carter qui lui sont associés, dont l'enveloppe 5.

Le troisième module C comprend des parties mobiles comme la turbine BP 1e et l'arbre de turbine BP 2 et des parties fixes comme le carter d'échappement formant support des paliers à l'arrière et la tuyère d'échappement.

La structure modulaire a pour but de permettre un pré-assemblage des éléments des différents modules indépendamment les uns des autres de manière à ce qu'ils soient prêts à être assemblés sans recourir à des opérations complexes. Ainsi le premier module A peut être solidarisé aux modules suivants par simple liaison des parties mobiles au moyen d'un écrou de turbine, l'écrou de turbine 14 reliant un moyen d'entraînement du réducteur de vitesse à l'arbre de turbine BP 2. La solidarisation est aussi obtenue par liaison des parties fixes par boulonnage de l'interface du module A à une bride radiale du carter du module B. Un exemple de ce dernier mode de liaison est montré sur la figure 6.

La figure 3 montre le moteur dont le premier module a été séparé du reste du moteur. Comme indiqué plus haut, on libère le premier module en dévissant l'écrou de turbine 14 d'une part et en dévissant les boulons 24 qui retiennent l'interface fixe du premier module A à la bride radiale 5R du carter 5 du deuxième module, voir figure 6.

La figure 4 montre la séparation des modules B et C l'un de l'autre. En libérant les éléments de carter respectifs les uns des autres, on permet la séparation des deux modules axialement l'un de l'autre ; l'arbre de turbine 2 n'est plus retenu par l'écrou de turbine et peut être dégagé du deuxième module.

La figure 2 montre plus en détail la partie avant du moteur, dans lequel le réducteur 7 est positionné entre l'arbre 3 de transmission de puissance attaché à la soufflante et l'arbre BP 2. Ce réducteur, a priori de type épicycloïdal, est représenté sous la forme schématique d'un rectangle ne montrant que son encombrement. Il est porté, de façon non représentée, par les supports de paliers 22 et 23 rattachés au carter intermédiaire et est entraîné par une couronne d'entrée 8 du réducteur s'étendant en amont de l'arbre BP 2, avec lequel elle coopère par l'intermédiaire de moyens d'entraînement. Le couple en sortie de ce réducteur 7 est transmis à l'arbre de soufflante 3, par une liaison classique, connue de l'homme du métier, comme par exemple une fixation de cet arbre de soufflante au porte-satellites, dans le cas d'un réducteur épicycloïdal.

Sur la figure, une partie fixe du moteur comprend la paroi interne 21 de la veine du flux primaire, un support amont de palier 22 et un support aval de palier 23. Ces deux supports s'étendent vers l'intérieur de la turbomachine en allant envelopper les paliers du roulement de butée 10 supportant l'arbre BP 2, et ceux des roulements de butée à billes 11 et de rouleaux 12 de l'arbre de soufflante 3. Une partie mobile, outre le rotor de la soufflante S, comprend, d'amont en aval, l'arbre de soufflante 3 sur lequel sont attachées les bagues mobiles des roulements 11 et 12 de l'arbre de soufflante, la couronne 8 d'entraînement du réducteur et un arbre intermédiaire 9 d'extension de la couronne d'entraînement, qui est fixée sur la bague mobile du roulement de butée 10 de l'arbre BP 2. Ces parties fixes et mobiles forment une enceinte E1 et sont classiquement jointes au niveau de labyrinthes positionnés à ses extrémités avant et arrière, de façon à former un volume étanche qui renferme les trois roulements 10, 11 et 12 mentionnés ci-dessus et qui assure la permanence de leur lubrification et de leur refroidissement. Les joints d'étanchéité précités ne sont pas représentés mais sont connus en tant que tels de l'homme du métier.

Cette enceinte E1 est entièrement portée par le premier module A, ce qui fait qu'elle peut être désolidarisée des autres modules ainsi que de l'arbre BP 2, sans que l'huile qui y est enfermée ne s'échappe. Par ailleurs les diamètres de la couronne d'entrée du réducteur 8 et de l'arbre intermédiaire 9 de l'arbre BP sont définis pour être supérieurs à celui de l'arbre BP 2, ce qui signifie qu'il est possible d'y introduire un outillage cylindrique pour atteindre l'écrou de fixation de l'arbre BP 2 sur la bague mobile de son roulement de butée 10 et permettre son dévissage sans que ces deux pièces n'interfèrent.

Sur la figure 5, on a représenté plus en détail l'écrou de turbine lorsqu'il est en place sur l'arbre de turbine.

En partant de l'aval, l'arbre BP 2 engrène, par un système de cannelures 132, sur un tourillon 13 qui est relié à la bague mobile 10M du roulement de butée 10 et qui est prolongé vers l'aval par l'arbre du compresseur basse pression 1a et entraîne le rotor du compresseur basse pression 1a. L'arbre BP 2 est maintenu en place, axialement, sur ce tourillon par l'intermédiaire d'un écrou de turbine 14 qui se visse sur un filetage 142 pratiqué sur la face interne de l'arbre BP 2 et qui vient prendre appui contre une butée axiale 15 s'étendant radialement vers l'intérieur à partir du tourillon 13. Cet écrou 14, qui attache l'arbre BP 2 au tourillon 13, est accessible depuis l'avant du moteur, moyennant toutefois le démontage préalable du capot de sa pointe avant, mais sans qu'il soit besoin de démonter d'autres pièces et notamment des éléments constitutifs des parois de l'enceinte E1. Un but de l'invention, à savoir la possibilité désolidariser le premier module A de l'arbre BP 2 sans désassembler l'enceinte E1, est ainsi atteint.

Comme on le voit également sur la figure 5, le tourillon 13 porte, vers l'amont, l'arbre intermédiaire 9 qui forme un moyen d'entraînement de la couronne d'entrée 8 du réducteur et qui est situé radialement entre le tourillon 13 et la bague mobile 10M du roulement de butée 10 de l'arbre BP à laquelle il est rigidement lié. Cet arbre intermédiaire 9 a pour objet de prolonger la couronne 8 et de permettre le démontage de celle-ci d'avec le tourillon 13, sans que cette séparation de la couronne en deux éléments distincts, une couronne proprement dite 8 et un arbre intermédiaire 9, soit essentielle à la réalisation de l'invention. L'extrémité aval de cet arbre intermédiaire 9 est positionnée autour de l'arbre BP 2 et permet, du fait du diamètre plus élevé de l'arbre, un accès à l'écrou 14 de fixation de l'arbre BP depuis l'avant du moteur. Il constitue de ce fait, avec la couronne d'entrée 8, un élément de paroi de l'enceinte avant E1 qui est détachable de l'arbre BP 2 mais qui peut rester en place et maintenir l'intégrité volumique de l'enceinte avant E1 lorsque l'arbre BP 2 est retiré.

Enfin la couronne 8 d'entraînement du réducteur est montée sur l'arbre intermédiaire 9 au moyen de cannelures qui font coopérer les deux arbres et qui permettent l'entraînement de la couronne 8, et donc du réducteur 7, par l'arbre BP 2. Elle a également, et pour les mêmes raisons que précédemment, un diamètre supérieur à celui de l'arbre BP 2.

Comme on le voit sur la figure 5, un écrou 16 est vissé sur une portion d'extrémité amont du tourillon 13 et est en butée axiale contre un épaulement 9e de l'arbre intermédiaire 9. L'arbre intermédiaire 9 est lui-même en appui axial contre la bague mobile 10M du palier 10 supportant l'extrémité amont de l'arbre de turbine BP2. Cet écrou 16 immobilise ainsi axialement l'arbre d'entraînement du compresseur basse pression 1a. Par cet écrou, le rotor du compresseur basse pression, désigné aussi compresseur de gavage, est maintenu en place dans le premier module A qui peut être manipulé sans risque d'endommagement pour cette partie mobile.

L'écrou 16 a un diamètre supérieur à celui de l'écrou 14 et ne gêne donc pas le passage de l'outil de montage/démontage de l'écrou 14.

## Revendications

1. Moteur (1) à structure modulaire comportant une pluralité de modules coaxiaux (A, B, C) avec, à une extrémité dudit moteur, un premier module (A) comprenant un arbre de transmission de puissance (3) et un réducteur de vitesse (7), ledit arbre de transmission de puissance étant entraîné par l'intermédiaire du réducteur de vitesse (7) par un arbre de turbine (2) solidaire d'un (C) desdits modules coaxiaux distinct du premier module dudit moteur, le réducteur de vitesse (7) comprenant un moyen d'entraînement (8 et 9) fixé à l'arbre de turbine (2) et à un tourillon (13) d'un arbre d'un rotor de compresseur basse pression (1a), le moteur (1) comportant un premier écrou (16) de fixation du moyen d'entraînement au tourillon et un second écrou (14) de fixation du moyen d'entraînement à l'arbre de turbine, le premier écrou (16) ayant un diamètre supérieur à celui du second écrou (14), **caractérisé par le fait que** ledit premier écrou (16) est vissé sur une portion d'extrémité amont du tourillon (13) et est en butée axiale contre un épaulement (9e) du moyen d'entraînement (8, 9), ledit moyen d'entraînement (8, 9) étant lui-même en appui axial contre une bague mobile (10M) d'un palier (10) supportant une extrémité amont de l'arbre de turbine (2).

2. Moteur selon la revendication 1 dont le réducteur de vitesse (7) est agencé de manière à présenter une ouverture centrale configurée pour permettre l'accès par un outil de montage/démontage, à travers ladite ouverture, au second écrou (14) depuis ladite extrémité du moteur.

3. Moteur selon la revendication 1 ou 2 dont le moyen d'entraînement (9) du réducteur de vitesse est de forme annulaire et présente ladite ouverture centrale de passage d'un outil de montage/démontage de l'écrou de turbine.

4. Moteur selon l'une des revendications 1 à 3 dont l'extrémité avant de l'arbre de turbine (2) est supportée par le palier (10) solidaire du premier module (A).

5. Moteur selon les revendications 3 et 4 prises ensemble dont le moyen d'entraînement (9) du réducteur de vitesse forme au moins une des parois mobiles pour une enceinte étanche (E1) de lubrification et de refroidissement dudit palier (10).

6. Moteur selon l'une des revendications 1 à 5 dont le premier module (A) est retenu par un moyen de fixation amovible (24) à un élément de carter du moteur.

7. Turboréacteur comportant un moteur selon l'une des revendications 1 à 6 dont le premier module (A) comprend une soufflante (S) montée sur ledit arbre de puissance (3).

8. Turboréacteur selon la revendication 7 comprenant un deuxième module (B), en aval du premier module, le deuxième module comportant un rotor, formé d'un compresseur haute pression (1b) et d'une turbine haute pression (1d), et une chambre de combustion (1d).

9. Turboréacteur selon la revendication précédente comprenant un troisième module (C) avec une turbine basse pression (1e), ledit arbre de turbine (2) étant solidaire du rotor de la turbine basse pression du troisième module.

10. Turboréacteur selon l'une des revendications 7 à 9, comprenant trois modules successifs, ledit premier module avec un rotor de soufflante et le compresseur basse pression, un deuxième module avec un rotor formé d'un compresseur haute pression et d'une turbine haute pression et une chambre de combustion et un troisième module avec un rotor de turbine basse pression et un arbre de turbine coaxial avec le rotor haute pression et relié au rotor de soufflante par l'intermédiaire du réducteur de vitesse, ce turboréacteur étant du type multiflux.

## Patentansprüche

1. Triebwerk (1) mit modularer Struktur, umfassend eine Vielzahl von koaxialen Modulen (A, B, C) mit, an einem Ende des Triebwerks, einem ersten Modul (A), das eine Kraftübertragungswelle (3) und ein Untersetzungsgetriebe (7) umfasst, wobei die Kraftübertragungswelle über das Untersetzungsgetriebe (7) von einer Turbinenwelle (2) angetrieben wird, die fest mit einem (C) der koaxialen Module verbunden ist, welches von dem ersten Modul des Triebwerks verschieden ist, wobei das Untersetzungsgetriebe (7) ein Antriebsmittel (8 und 9) umfasst, das an der Turbinenwelle (2) und an einem Drehzapfen (13) einer Welle eines Niederdruckverdichterrotors (1a) befestigt ist, wobei das Triebwerk (1) eine erste Mutter (16) zur Befestigung des Antriebsmittels an dem Drehzapfen und eine zweite Mutter (14) zur Befestigung des Antriebsmittels an der Turbinenwelle umfasst, wobei die erste Mutter (16) einen größeren Durchmesser als denjenigen der zweiten Mutter (14) besitzt, **gekennzeichnet durch** die Tatsache, dass die erste Mutter (16) auf einen stromaufwärts liegenden Endabschnitt des Drehzapfens (13) aufgeschraubt ist und axial an einer Schulter (9e) des Antriebsmittels (8, 9) anliegt, wobei die Antriebsmittel (8, 9) selbst axial an einem bewegbaren Ring (10M) eines Lagers (10) anliegen, welches ein stromaufwärts liegendes Ende der Turbinenwelle (2) stützt.

2. Triebwerk nach Anspruch 1, dessen Untersetzungsgetriebe (7) so angeordnet ist, dass es eine zentrale Öffnung aufweist, die so konfiguriert ist, dass durch die Öffnung mittels eines Werkzeugs zur Montage/Demontage ein Zugang zu der zweiten Mutter (14) von dem Ende des Triebwerks aus ermöglicht wird.

3. Triebwerk nach Anspruch 1 oder 2, dessen Mittel zum Antrieb (9) des Untersetzungsgetriebes ringförmig ist und die zentrale Öffnung für den Durchgang eines Werkzeugs zur Montage/Demontage der Turbinenmutter aufweist.

4. Triebwerk nach einem der Ansprüche 1 bis 3, dessen vorderes Ende der Turbinenwelle (2) durch das Lager (10) gestützt wird, das fest mit dem ersten Modul (A) verbunden ist.

5. Triebwerk nach den Ansprüchen 3 und 4 zusammengenommen, dessen Antriebsmittel (9) des Untersetzungsgetriebes mindestens eine der beweglichen Wände für eine dichte Einfassung (E1) zur Schmierung und Kühlung des Lagers (10) bildet.

6. Triebwerk nach einem der Ansprüche 1 bis 5, dessen erstes Modul (A) durch ein abnehmbares Befestigungsmittel (24) an einem Gehäuseelement des Triebwerks gehalten wird.

7. Turbostrahltriebwerk, umfassend ein Triebwerk nach einem der Ansprüche 1 bis 6, dessen erstes Modul (A) ein auf der Kraftübertragungswelle (3) montiertes Gebläse (S) umfasst.

8. Turbostrahltriebwerk nach Anspruch 7, umfassend ein zweites Modul (B), stromabwärts des ersten Moduls, wobei das zweite Modul einen Rotor, der aus einem Hochdruckverdichter (1b) und einer Hochdruckturbine (1d) gebildet ist, und eine Brennkammer (1d) umfasst.

9. Turbostrahltriebwerk nach dem vorstehenden Anspruch, umfassend ein drittes Modul (C) mit einer Niederdruckturbine (1e), wobei die Turbinenwelle (2) fest mit dem Rotor der Niederdruckturbine des dritten Moduls verbunden ist.

10. Turbostrahltriebwerk nach einem der Ansprüche 7 bis 9, umfassend drei aufeinanderfolgende Module, das erste Modul mit einem Bläserrotor und dem Niederdruckverdichter, ein zweites Modul mit einem Rotor, der aus einem Hochdruckverdichter und einer Hochdruckturbine gebildet ist, und einer Brennkammer und ein drittes Modul mit einem Niederdruckturbinenrotor und einer Turbinenwelle, die koaxial zum Hochdruckrotor angeordnet und über das Untersetzungsgetriebe mit dem Bläserrotor verbunden ist, wobei dieses Turbostrahltriebwerk vom Typ Mehrstromtriebwerk ist.

## Claims

1. Engine (1) having a modular structure, comprising a plurality of coaxial modules (A, B, C) having, at one end of said engine, a first module (A) comprising a power transmission shaft (3) and a speed reduction gear (7), said power transmission shaft being driven via the speed reduction gear (7) by a turbine shaft (2) secured to one (C) of said coaxial modules which is separate from the first module of said engine, the speed reduction gear (7) comprising a drive means (8 and 9) fixed to the turbine shaft (2) and to a journal (13) of a shaft of a low-pressure compressor rotor (1a), the engine (1) comprising a first nut (16) for fastening the drive means to the journal and a second nut (14) for fastening the drive means to the turbine shaft, the first nut (16) having a diameter greater than that of the second nut (14), **characterised in that** the said first nut (16) is screwed onto an upstream end portion of the journal (13) and is in axial abutment against a shoulder (9e) of the drive means (8, 9), said drive means (8, 9) itself being axially supported against a movable ring (10M) of a bearing (10) supporting one end upstream of the turbine shaft (2).

2. Engine according to claim 1, the speed reduction gear (7) of which is arranged such as to have a central opening configured to enable access by a fitting/removal tool, through said opening, to the second nut (14) from said end of the engine.

3. Engine according to either claim 1 or claim 2, of which the drive means (9) of the speed reduction gear is annular in shape and has said central opening for passage of a tool for fitting/removing the turbine nut.

4. Engine according to any of claims 1 to 3, of which the front end of the turbine shaft (2) is supported by the bearing (10) secured to the first module (A).

5. Engine according to claims 3 and 4 taken together, of which the drive means (9) of the speed reduction gear forms at least one of the movable walls for a leakproof enclosure (E1) for lubricating and cooling said bearing (10).

6. Engine according to any of claims 1 to 5, of which the first module (A) is retained by a removable means for fastening (24) to a housing element of the engine.

7. Turbojet engine comprising an engine according to any of claims 1 to 6, the first module (A) of which comprises a fan (S) mounted on said power shaft (3).

8. Turbojet engine according to claim 7, comprising a second module (B), downstream of the first module, the second module including a rotor, formed by a high-pressure compressor (1b) and a high-pressure turbine (1d), and a combustion chamber (1d).

9. Turbojet engine according to the preceding claim, comprising a third module (C) having a low-pressure turbine (1e), said turbine shaft (2) being secured to the rotor of the low-pressure turbine of the third module.

10. Turbojet engine according to any of claims 7 to 9, comprising three successive modules, said first module having a fan rotor and the low-pressure compressor, a second module having a rotor, formed by a high-pressure compressor and a high-pressure turbine, and a combustion chamber, and a third module having a low-pressure turbine rotor and a coaxial turbine shaft that has the high-pressure rotor and, when in use, is connected to the fan rotor by means of the speed reduction gear, this turbojet engine being of the multi-flow type.
